# DEMANDE DE BREVET EUROPEEN

(11) **EP 1 743 982 A1**
(43) Date de publication de la demande: **17.01.2007**
(21) Numéro de dépôt: 06360030.8
(22) Date de dépôt: 12.07.2006
(51) Int. Cl.: E03B 7/07, E03B 9/08

(54) **Borne d'extérieur abritant un ensemble de comptage**

(30) Priorité: 12.07.2005 FR 0507495
(71) Demandeur: Saint-Germain et Straub Société Anonyme, 80531 Friville-Escarbotin Cedex (FR)
(72) Inventeur: Helle, Jacky, 80513 Friville Escarbotin (FR)
(74) Mandataire: Munier, Laurent

(57) **Abrégé**

La Borne d'extérieur (1) abrite un ensemble de comptage (2). Elle comporte en partie aérienne un coffret (7) à face inférieure ouverte et en partie souterraine un caisson isolé (3) en forme de cheminée ouverte vers le haut plongeant dans le sol où elle atteint la profondeur hors gel. Le coffret (7) présente des parois légères et est relié au caisson isolé (3) par une plaque (4) de positionnement sur le sol présentant une ouverture centrale (5) correspondant à l'ouverture supérieure de la cheminée. L'ensemble de comptage de fluide (2) étant monté dans le caisson (3) à une profondeur hors gel. Ladite ouverture centrale (5) permet le passage de l'ensemble de comptage (2) amovible relié à une conduite d'arrivée de fluide (12) et une conduite de départ de fluide (13) via des moyens de jonction souples (18, 19) et qui sont aptes à se déployer à l'intérieur du caisson (3) et du coffret (7).

Application à la lecture du compteur placé en profondeur hors-gel par remontée de l'ensemble de comptage (2) sans coupure de l'écoulement du fluide.

## Description

La présente invention concerne une borne d'extérieur abritant un ensemble de comptage.

Les compteurs d'eau installés à l'extérieur doivent être relativement accessibles pour pouvoir être lus et entretenus périodiquement et être en outre protégés contre le gel, ainsi que les extrémités des canalisations qui y sont raccordées pour éviter leur détérioration.

A cet effet, des bornes plus ou moins isolées thermiquement du type comportant en partie aérienne un coffret à face inférieure ouverte et en partie souterraine un caisson isolé en forme de cheminée ouverte vers le haut plongeant dans le sol jusqu'à une profondeur hors gel et dont la partie supérieure, le coffret, qui dépasse du sol et qui forme la borne proprement dite possède une ouverture sur l'une de ses faces latérales pouvant être fermée par une porte. Ces bornes ont par conséquent une surface d'échange thermique avec l'air ambiant qui est relativement importante. Ceci conduit, afin de préserver le compteur du gel, à le recouvrir de matière isolante (polystyrène expansé par exemple). Dans ce cas, l'accès et la visibilité du compteur ne sont pas satisfaisantes.

Aussi, la paroi du caisson constituant le sommet de la borne s'amincit en direction de l'ouverture de la borne. Ceci suppose que la porte comprend sur sa face intérieure une saillie allongée constituée de matériau isolant thermique, propre à compenser l'amincissement de ladite paroi. De plus, pour permettre la lecture, le compteur d'eau est situé au-dessus du niveau du sol et est incliné en direction de l'ouverture de l'ordre d'une vingtaine de degrés. Ce qui est préjudiciable au bon fonctionnement du compteur.

En outre, cette borne exige suffisamment de matériau isolant sur le coffret pour rendre possible l'existence d'un phénomène de convexion permettant la protection du compteur et de l'extrémité des canalisations qui y sont raccordées contre le gel. Des variations d'épaisseurs sont obligatoires pour ne pas gêner la lecture du cadran puisque un amincissement permet aux yeux de plonger sur le cadran du compteur quand la porte est ouverte, la majeure partie de la matière isolante située au-dessus du compteur étant retirée par cette ouverture. De plus, la borne est fixe et ne peut pas être orientée en fonction des canalisations.

Par le brevet n° FR2 805 834 au nom de la demanderesse, on connaît des bornes placées au-dessus d'un regard contenant un compteur amovible.

Ces bornes très avantageuses car à parois légères n'exigent pas de matériau isolé thermiquement ; mais ne prévoient pas de basculement, de pivotement ou de coulissement entre le coffret et le regard.

La présente invention a pour but de remédier à ces inconvénients en fournissant des bornes d'extérieur homogènes qui assurent une parfaite protection du compteur et des extrémités des canalisations qui y sont raccordées contre le gel, tout en conservant une parfaite lisibilité et accessibilité au compteur.

A cette fin, la borne comprend d'une part le coffret qui présente des parois légères et est relié au caisson isolé par une plaque de positionnement sur le sol présentant une ouverture centrale pour le passage de l'ensemble de comptage du fluide amovible correspondant à l'ouverture supérieure de la cheminée, le caisson comprenant un couvercle amovible isolé thermiquement ; cet ensemble de comptage de fluide étant monté dans le caisson formant cheminée à profondeur hors gel, relié à une conduite d'arrivée de fluide et une conduite de départ de fluide, s'étendant dans une tranchée réalisée dans le sol, des moyens de jonction souples sont reliés dans une enveloppe théorique de dimensions horizontales légèrement supérieures à l'encombrement horizontal du compteur et étant aptes à se déployer à l'intérieur du caisson et du coffret, en particulier sans coupure de fluide en pression lors de la remontée de l'ensemble de comptage monté sur une platine de comptage maintenant lesdits moyens de jonction souples reliant les conduites d'arrivée et de départ de fluide à l'ensemble de comptage.

Ainsi, l'ensemble de comptage est maintenu hors gel et est remonté provisoirement jusqu'au niveau de l'ouverture pour la lecture du compteur ou autre intervention.

L'invention sera bien comprise à l'aide de la description qui suit, en référence aux dessins schématiques annexés représentant à titre d'exemple non limitatif une forme de réalisation préférée de la borne de raccordement qu'elle concerne.

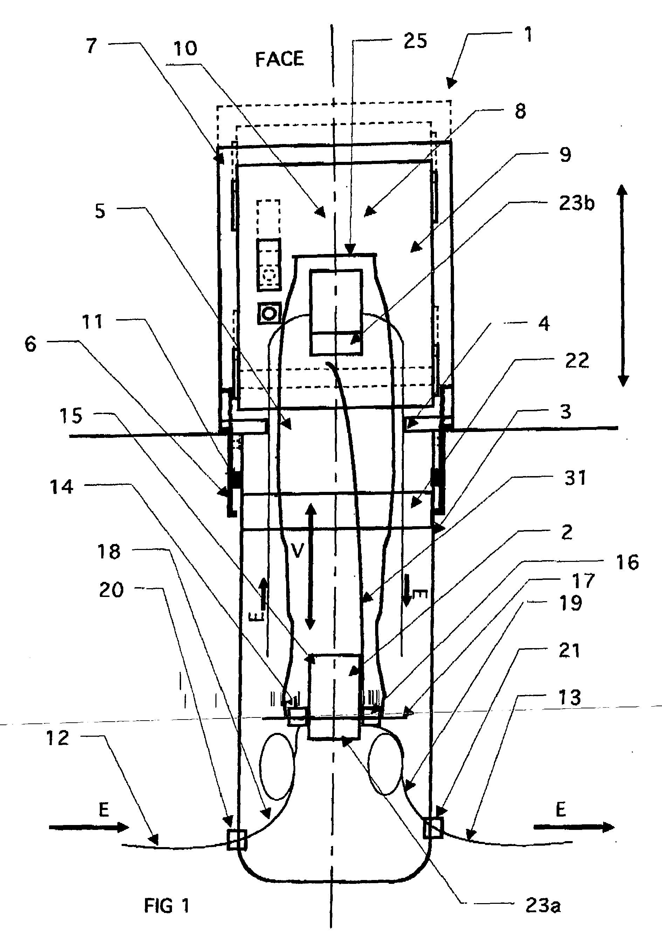

- La Fig. 1 est une borne selon l'invention vue en coupe longitudinale abritant un ensemble de comptage amovible dans un caisson enterré surmonté d'un coffret muni d'une plaque inférieure d'appui.

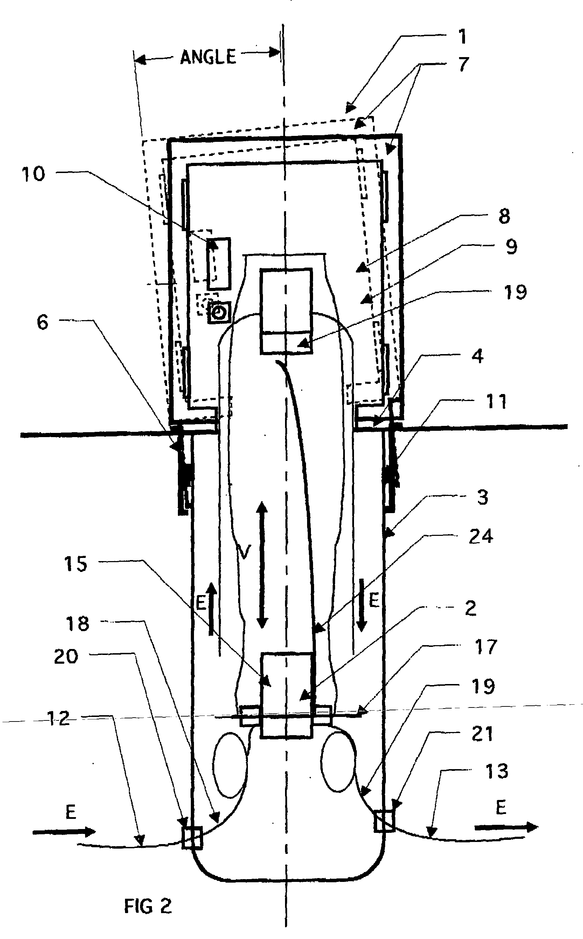

- La Fig. 2 représente en coupe longitudinale une borne correspondant à celle de la figure 1 dont le coffret est incliné par rapport à l'axe du caisson plongeant dans le sol.

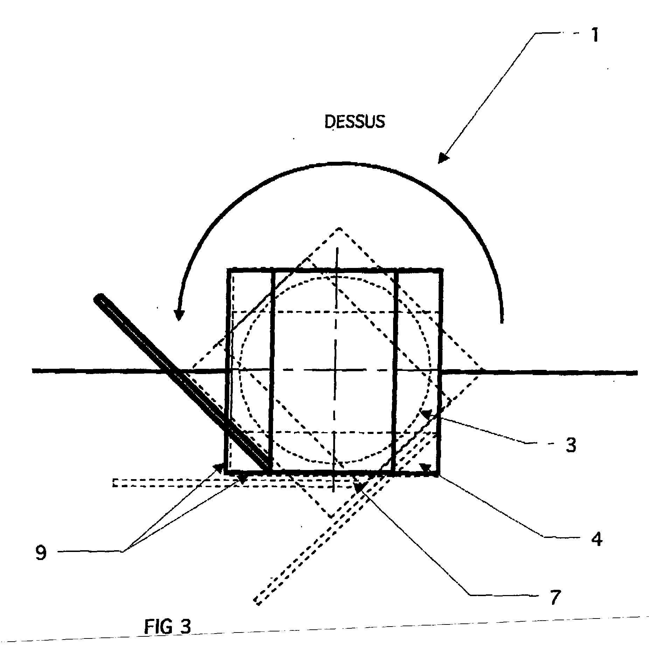

- La Fig. 3 représente vu de dessus un coffret identique à celui représenté sur les figures précédentes.

Les figures représentent une borne d'extérieur 1 abritant un ensemble de comptage 2.

La borne 1 comporte, pour abriter un ensemble de comptage 2, un caisson isolé 3 en forme de cheminée qui plonge dans le sol jusqu'à une profondeur de l'ordre du mètre où elle atteint les couches du sol conservant en permanence une température positive, donc hors gel.

La borne 1 comprend au niveau du sol une plaque 4 présentant une ouverture 5 à rebord inférieur et permettant un ajustement de la plaque 4 avec un cylindre tronconique 6 dans lequel est emboîté le caisson 3.

La plaque 4 est la partie inférieure d'un coffret 7 qui forme la partie supérieure qui dépasse du sol et forme la borne proprement dite. Ce coffret 7 possède une ouverture 8 sur l'une de ses faces latérales 9 pouvant être fermée par une porte 10 fixée sur le coffret 7. Ce coffret 7 est d'une structure simple demandant peu de matière. Il présente des parois légères car non isolées. Le coffret 7 se présente sous forme sensiblement parallélépipédique ouverte vers le bas et fixé à la plaque 4 de jonction avec le caisson enterré 3.

En vue de permettre le positionnement vertical du coffret 7 même en cas d'inclinaison du caisson 3, la paroi externe du caisson 3 en forme de cheminée vient s'emboîter en partie supérieure dans un cylindre tronconique 6 recevant un joint souple 11 formant jonction avec la plaque 4 support du coffret 7 dont l'ouverture 5présente un rebord inférieur formant excroissance pour présenter un alésage qui vient s'ajuster avec le cylindre tronconique 6 réglable en hauteur pivotant et permettant de plus une rotation horizontale.

Cette géométrie spécifique permet d'incliner le coffret 7 par rapport à l'axe du caisson 3 si par exemple ledit caisson ne plonge pas verticalement dans le sol.

Cette inclinaison d'angle se fait par pivotement du coffret 7.

L'ensemble de comptage de fluide 2 est relié à une conduite d'arrivée de fluide 12 et une conduite de départ du fluide 13. Les flèches E indiquent le sens de l'écoulement du fluide. Ledit ensemble de comptage 2 comprend un robinet 14 relié à un coude et au compteur de fluide 15 lui-même relié à un clapet anti-retour 16 via un coude.

Toutes les pièces de robinetterie 14, 15, 16 sont guidées par une platine 17. Le robinet 14 et le clapet 16 sont liés aux conduites d'arrivée et de départ de fluide 12, 13 par des tubes de liaison flexibles formant moyens de jonction souples 18, 19 fixés à des raccords droits 20, 21 qui traversent la paroi verticale du caisson 3. Les raccords droits 20, 21 sont fixés aux conduites qui s'étendent dans une tranchée réalisée dans le sol. Pour permettre de sortir l'ensemble de comptage 2 en pression, les moyens de jonction souples 18, 19 sont aptes à se déployer au moins jusqu'au niveau de la porte 10 du coffret 7. Le caisson 3 présente son ouverture supérieure correspondant à l'ouverture 5 du coffret 7. Ce caisson 3 est composé avec des pièces standards et de réalisation simple. La surface interne de la partie supérieure du caisson est revêtue par un matériau thermiquement isolant. Cette partie supérieure est fermée immédiatement au-dessus de l'ensemble de comptage de fluide 2 et/ou de ses parties annexes par un couvercle amovible 22 en matériau thermiquement isolant.

L'ensemble de comptage de fluide 2 de dimensions horizontales légèrement supérieures à l'encombrement horizontal du compteur 15 est monté sur la platine amovible 17 qui maintient et guide les tubes de liaison flexibles 18, 19. La platine amovible 17 est descendue et fixée de manière réversible sur un support platine 23a qui indexe la profondeur hors gel.

L'ensemble de comptage 2 de l'installation suivant l'invention est amovible. Le déplacement de l'ensemble de comptage 2 est vertical suivant la flèche V et peut se faire sans coupure du fluide en pression. Chaque tube de liaison des moyens de jonction souple 18, 19 est d'une longueur suffisante pour se déployer dans le coffret 7 ou plus haut. Comme lesdits moyens de jonction souples 18, 19 sont des tubes de liaison flexibles lovés suivant la forme d'au plus une spire de diamètre décroissant au fur et à mesure de la montée du compteur 15, celui-ci peut atteindre la porte 10 du coffret 7 en fonctionnement. La course verticale de l'ensemble de comptage 2 est limitée à sa partie supérieure par un système limiteur de sortie 24 de l'ensemble de comptage 2 qui maintient les rayons de courbure minimum des spires formées par les tubes de liaison flexibles 18, 19. Le support platine d'indexation 23a limite la course à la position inférieure de l'ensemble platine 17 situé à la profondeur hors gel. L'ensemble platine 17 est équipé d'un moyen de fixation 23b pour l'accrochage temporaire dans le coffret 7 à hauteur de lecture ou d'entretien. Pour faciliter la lecture et l'accès à l'ensemble de comptage, celui-ci est relié à un système de préhension 25 dont une poignée souple dans le coffret 7 permet le passage à travers la porte 10 en remontant ledit ensemble de comptage 2 au niveau de la lecture dans ledit coffret 7 ou à l'extérieur. L'installation suivant l'invention est réalisée avec des pièces standards et résistances à la corrosion pour supporter l'agressivité du sol. Le caisson 3 de petit diamètre est réalisé au moyen d'un tuyau.

Dans le but d'orienter les moyens de jonction vers les canalisations, le caisson souterrain formant cheminée présente une paroi interne cylindrique constituée de matériau isolant thermique approprié, propre à protéger le compteur d'eau situé au-dessous du niveau du sol. Le coffret 7 peut tourner et être orienté en fonction du tracé de la canalisation dans le sol et par conséquent de l'ensemble de comptage 2. Ainsi, la porte 10 peut toujours être tournée vers l'intervenant.

Pour limiter l'encombrement, le coffret 7 à parois minces est plus petit que les bornes connues à parois isolées thermiquement. Les coffrets permettent d'obtenir une grande compacité d'installation et un encombrement réduit.

Le fonctionnement de l'installation est le suivant : le caisson 3 est enterré au niveau d'une canalisation de fluide disposées dans une tranchée. L'installation de mesure et de visualisation de volume de fluide a été disposée entre les conduites 12, 13 formant une portion de la canalisation en suivant l'orientation des conduites, ainsi le fluide traverse l'ensemble de comptage 2 fixé et indexé en profondeur hors gel sur la platine 17. Le fluide arrive et repart de l'ensemble de comptage 2 par les tubes flexibles qui sont lovés suivant la forme de spires de grand diamètre en position basse. Le coffret est tourné en fonction de la position du compteur 15, des conduites et de l'opérateur. L'indexation de profondeur de la platine 17 arrêtant le déplacement du compteur 15 dès la hauteur hors gel, donc à la profondeur minimum. Pour accéder au compteur 15, que ce soit pour la relève du volume consommé, l'entretien et le remplacement de pièces, le contrôle du compteur et des pièces de robinetterie comme le clapet anti-retour 16, la prise d'échantillon d'eau pour analyse et la pose et le contrôle du système anti-fraude. L'ensemble de comptage 2 est soulevé en même temps que la platine 17. Au fur et à mesure de la montée de l'ensemble de comptage 2, le diamètre des spires décroît. La course maximum vers le haut de l'ensemble de comptage 2 est arrêté par le système limiteur de sortie 24 qui maintient les rayons de courbure minimum des spires formées par les tubes de liaison flexibles. Ainsi, le débit de fluide est maintenu en position haute de l'ensemble de comptage 2.

Afin de faciliter le transport, l'ouverture 5 de la plaque inférieure du coffret 7 est de diamètre légèrement supérieur à celui de la surface extérieure du caisson 3 en forme de cheminée permettant un coulissement du coffret 7 avec sa plaque support par rapport audit caisson 3 et rabattement du coffret 7 par descente et introduction du caisson 3 à travers le coffret 7.

Bien que l'invention ait été décrite en liaison avec des structures particulières, elle n'y est nullement limitée et on peut y apporter de nombreuses variantes.

Les combinaison des différentes réalisations représentées sur les dessins ou décrites ci-dessus ne sortent pas du cadre de l'invention.

**Signes de référence**

| | | | |
|---|---|---|---|
| 1 | Borne d'extérieur | 15 | Compteur |
| 2 | Ensemble de comptage | 16 | Clapet anti-retour |
| 3 | Caisson enterré | 17 | Platine |
| 4 | Plaque | 18 | Moyen de jonction souple |
| 5 | Ouverture | 19 | Moyen de jonction souple |
| 6 | Cylindre tronconique | 20 | Raccord droit |
| 7 | Coffret | 21 | Raccord droit |
| 8 | Ouverture | 22 | Couvercle amovible |
| 9 | Face latérale | 23a | Support platine |
| 10 | Porte | 23b | Moyen de fixation |
| 11 | Joint souple | 24 | Système limiteur de sortie |
| 12 | Conduite d'arrivée de fluide | 25 | Système de préhension |
| 13 | Conduite de départ de fluide | | |
| 14 | Robinet | E | Ecoulement du fluide |
| | | V | Flèche déplacement platine |

Les signes de référence insérés après les caractéristiques techniques mentionnées dans les revendications ont pour seul but de faciliter la compréhension de ces dernières et n'en limitent aucunement la portée.

## Revendications

1. Borne d'extérieur (1) abritant un ensemble de comptage (2) du type comportant en partie aérienne un coffret (7) à face inférieure ouverte et en partie souterraine un caisson isolé (3) en forme de cheminée ouverte vers le haut plongeant dans le sol jusqu'à une profondeur hors gel et dont la partie supérieure, le coffret (7), qui dépasse du sol et qui forme la borne proprement dite possède une ouverture (8) sur l'une de ses faces latérales (9) pouvant être fermée par une porte (10), **caractérisée en ce que** d'une part, le coffret (7) présente des parois légères et est relié au caisson isolé (3) par une plaque (4) de positionnement sur le sol présentant une ouverture centrale (5) pour le passage de l'ensemble de comptage du fluide (2) amovible correspondant à l'ouverture supérieure de la cheminée, le caisson (3) comprenant un couvercle amovible (22) isolé thermiquement, cet ensemble de comptage de fluide (2) étant monté dans le caisson (3) formant cheminée à profondeur hors gel, relié à une conduite d'arrivée de fluide (12) et une conduite de départ de fluide (13) ces conduites (12, 13) s'étendant dans une tranchée réalisée dans le sol, des moyens de jonction souples (18, 19) sont reliés dans une enveloppe théorique de dimensions horizontales légèrement supérieures à l'encombrement horizontal du compteur (15) et étant aptes à se déployer à l'intérieur du caisson (3) et du coffret (7), en particulier sans coupure de fluide en pression, lors de la remontée de l'ensemble de comptage (2) monté sur une platine (17) de comptage maintenant lesdits moyens de jonction souples (18, 19) reliant les conduites d'arrivée et de départ de fluide (12, 13) à l'ensemble de comptage (2).

2. Borne suivant la revendication 1, dans laquelle les moyens de jonction souples (18, 19) sont aptes à se déployer au moins jusqu'au niveau de la porte (10) du coffret (7).

3. Borne suivant l'une des revendications précédentes, dans laquelle les moyens de jonction souples (18, 19) sont des tubes de liaison flexibles lovés suivant la forme d'au plus une spire de diamètre décroissant au fur et à mesure de la montée du compteur de fluide (15).

4. Borne suivant l'une des revendications précédentes, dans laquelle la paroi externe du caisson (3) en forme de cheminée vient s'emboîter en partie supérieure dans un cylindre tronconique (6) recevant un joint souple (11) formant jonction avec la plaque (4) support du coffret (7) dont l'ouverture présente un rebord inférieur formant excroissance pour présenter un alésage qui vient s'ajuster avec le cylindre tronconique réglable en hauteur pivotant et permettant de plus une rotation horizontale.

5. Borne suivant l'une des revendications précédentes, dans laquelle le caisson souterrain (3) formant cheminée présente une paroi interne cylindrique constituée de matériau isolant thermique approprié, propre à protéger le compteur d'eau (15) situé au-dessous du niveau du sol.

6. Borne suivant l'une des revendications précédentes dans laquelle l'ensemble de comptage (2) est relié à un système de préhension (25) dans le coffret (7) permet le passage à travers la porte (10) en remontant ledit ensemble de comptage (2) au niveau de la lecture dans ledit coffret ou à l'extérieur.

7. Borne suivant l'une des revendications précédentes, dans laquelle l'ouverture (5) de la plaque inférieure (4) du coffret (7) est de diamètre légèrement supérieur à celui de la surface extérieure du caisson (3) en forme de cheminée permettant un coulissement du coffret avec sa plaque support par rapport audit caisson et rabattement du coffret par descente et introduction du caisson (3) à travers le coffret (7).
